# FASCICULE DE BREVET EUROPEEN

(11) **EP 2 093 130 B1**
(45) Date de publication et mention de la délivrance du brevet: **31.08.2011**
(21) Numéro de dépôt: 09151908.2
(22) Date de dépôt: 03.02.2009
(51) Int. Cl.: B62D 21/11

(54) **Assemblage d'un berceau, d'une prolonge et d'un triangle d'un véhicule et véhicule équipé d'un tel assemblage**
Montage eines Achsrahmens, einer Verlängerung und eines Dreiecks eines Kraftfahrzeugs und mit einem solchen Verbund ausgestattetes Fahrzeug
Assembly of a cradle, lashing rope and a hitch tongue of a vehicle and vehicle equipped with such an assembly

(30) Priorité: 21.02.2008 FR 0851127
(43) Date de publication de la demande: 26.08.2009
(73) Titulaire: Peugeot Citroën Automobiles SA, 78140 Vélizy-Villacoublay (FR)
(72) Inventeur: Negri, Bérangère, 92350, Le Plessis Robinson (FR); Verdier, Laurent, 75014, PARIS (FR)

(56) Documents cités:
- FR-A- 2 813 273

## Description

La présente invention concerne un assemblage d'un berceau, d'une prolonge et d'un triangle d'un véhicule automobile, ainsi qu'un véhicule automobile équipé d'un tel assemblage.

Un véhicule automobile comprend généralement un berceau relié au châssis du véhicule par l'intermédiaire de biellettes également appelées "tirant". Le berceau se prolonge par des éléments dénommés "prolonge" vers l'avant du véhicule. Sur le berceau sont également fixés les triangles de suspension du véhicule.

Le document FR-A-2 813 273 divulgue un dispositif de liaison entre un berceau, un tirant et un triangle. Le dispositif de liaison comprend des moyens de vis et d'écrou qui traversent à la fois le tirant et le triangle pour les relier au berceau au niveau du point d'articulation avant. L'axe de la vis est sensiblement orienté dans la direction d'avancement, c'est-à-dire l'axe X.

Le document FR-A-2 824 523 divulgue un assemblage entre un berceau, une prolonge et un triangle qui est réalisé par soudage et emmanchement des différents éléments.

Le document FR-A-2 767 750 divulgue un dispositif de liaison entre un berceau, le châssis du véhicule et un triangle de suspension. Le dispositif de liaison comprend des moyens de vis et d'écrou qui traversent à la fois le triangle et le berceau pour les relier au châssis du véhicule. L'axe de la vis est vertical, c'est-à-dire orienté selon l'axe des Z du véhicule.

Aucune de ces solutions ne permet un assemblage du berceau, de la prolonge et du triangle qui soit simple à mettre en oeuvre et peu encombrant.

L'invention a pour but de remédier aux inconvénients mentionnés ci-dessus en proposant un assemblage qui soit simple à mettre en oeuvre et de masse réduite.

A cet effet, la présente invention concerne un assemblage comprenant un berceau, un triangle, une prolonge de berceau et un dispositif de fixation, l'assemblage étant caractérisé en ce que le dispositif de fixation comprend des moyens de liaison prévus pour relier entre eux le berceau, le triangle et la prolonge.

Avantageusement, les moyens de liaison comprennent un axe libre sur lequel s'emmanche la prolonge.

Avantageusement, la prolonge s'emmanche sur l'axe libre par l'intermédiaire d'un élément de filtrage du type manchon en caoutchouc.

Avantageusement, les moyens de liaison comprennent une vis et un écrou, le berceau et le triangle comprennent des moyens formant palier, et les moyens formant palier s'emmanchent sur l'axe de la vis entre la tête de la vis et l'écrou.

Avantageusement, l'axe de la vis et l'axe libre sont coaxiaux.

Avantageusement, les moyens formant palier du berceau forment une première chape, dans laquelle sont disposés les moyens formant palier du triangle, et l'axe de la vis traverse la première chape et les moyens formant palier du triangle.

Avantageusement, l'assemblage comprend un tirant muni de moyens formant palier, les moyens formant palier du berceau forment une deuxième chape dans laquelle sont disposés les moyens formant palier du tirant, et l'axe de la vis traverse la deuxième chape et les moyens formant palier du tirant.

Avantageusement, la tête de la vis et l'écrou viennent en appui contre les parois extérieures des chapes.

L'invention concerne également un véhicule automobile comprenant un assemblage selon l'une des variantes précédentes.

L'invention sera mieux comprise, et d'autres buts, caractéristiques, détails et avantages de celle-ci apparaîtront plus clairement au cours de la description explicative qui va suivre, faite en référence aux dessins schématiques annexés, donnés uniquement à titre d'exemple illustrant un mode de réalisation de l'invention et dans desquels :
- la figure 1 représente une vue d'un assemblage d'un berceau, d'un triangle et d'une prolonge selon l'invention,
- la figure 2 est une coupe de l'assemblage selon un premier mode de réalisation de l'invention,
- la figure 3 est une coupe de l'assemblage selon un deuxième mode de réalisation de l'invention, et
- la figure 4 est une coupe de l'assemblage selon un troisième mode de réalisation de l'invention.

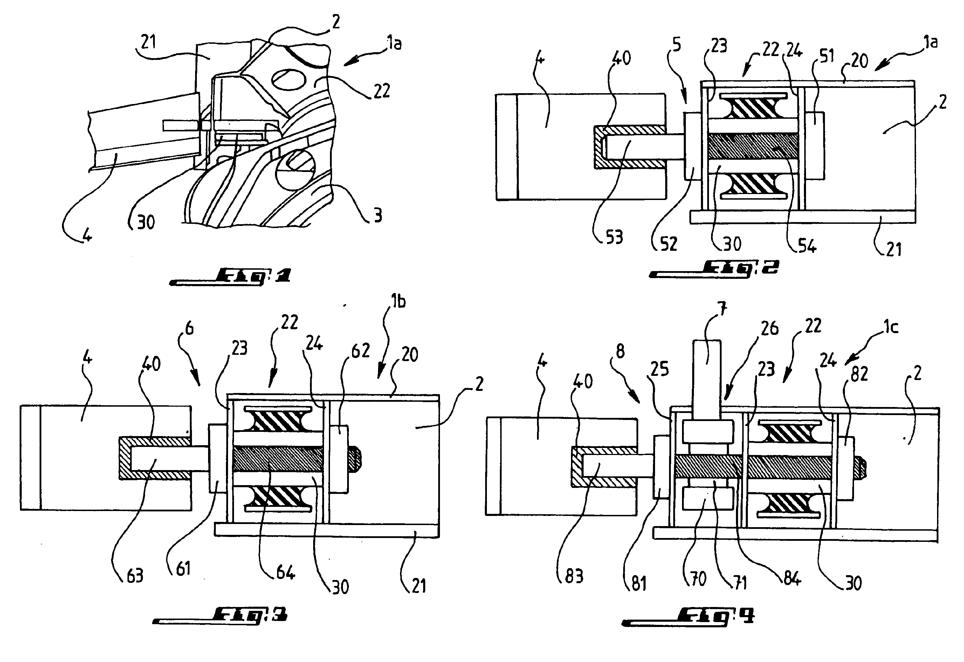

La figure 1 montre un assemblage la comprenant un berceau 2, un triangle de suspension 3, une prolonge de berceau 4 et un dispositif de fixation. Un tel assemblage 1a est mis en place dans un véhicule automobile.

Le dispositif de fixation comprend des moyens de liaison prévus pour relier entre eux le berceau 2, le triangle 3 et la prolonge 4. Les moyens de liaison sont ainsi communs pour les trois éléments d'où une réduction du poids et des coûts.

Le berceau 2 est constitué ici d'une traverse inférieure 21 et d'une traverse supérieure 20 qui sont fixées l'une avec l'autre pour former un ensemble.

Comme cela est décrit plus en détail ci-après, les moyens de liaison comprennent une vis et un écrou. Le berceau 2 et le triangle 3 comprennent des moyens formant palier, et les moyens formant palier s'emmanchent sur l'axe de la vis entre la tête de la vis et l'écrou.

La figure 2 montre un premier mode de réalisation de l'invention, dans lequel les moyens formant palier 23, 24 du berceau 2 forment une première chape 22, dans laquelle sont disposés les moyens formant palier 30 du triangle 3 qui prennent la forme d'un cylindre. L'axe 54 de la vis traverse alors la première chape 22 et les moyens formant palier 30 du triangle 3. L'axe 54 de la vis est fileté pour permettre le vissage de l'écrou 52.

Les moyens de liaison 5 comprennent également un axe libre 53 sur lequel s'emmanche la prolonge 4 qui présente à cet effet un alésage. Pour découpler acoustiquement la prolonge 4 et le berceau 2, la prolonge 4 s'emmanche sur l'axe libre 53 par l'intermédiaire d'un élément de filtrage 40 du type manchon en caoutchouc lié à la prolonge 4 par surmoulage, par collage ou par emmanchement.

L'axe 54 de la vis et l'axe libre 53 sont coaxiaux pour faciliter l'alignement de la prolonge 4 lors de l'assemblage. Les moyens de liaison 5 permettent ainsi de centrer la prolonge, c'est-à-dire de positionner la prolonge 4 par rapport au berceau 2 et d'interdire le mouvement relatif de la prolonge 4 vis-à-vis du berceau 2 dans les directions Y et Z du véhicule. Lorsqu'un élément de filtrage 40 est intégré à la prolonge 4, un léger débattement dans les directions Y et Z est autorisé.

La prolonge 4 se trouve en vis-à-vis de la paroi 23 de la chape 22.

Dans le mode de réalisation de la figure 2, l'écrou 52 vient en appui contre cette paroi 23 et la tête 51 de la vis vient en appui contre l'autre paroi 24 de la chape 22.

La figure 3 montre un autre mode de réalisation d'un assemblage 1b selon l'invention. Le mode de réalisation de l'invention représenté sur la figure 3 diffère du mode de réalisation de la figure 2 par le fait que la position de la tête 61 de la vis et la position de l'écrou 62 sont inversées. Les moyens de liaison 6 comprennent également un axe fileté 64 et un axe libre 63.

Dans le mode de réalisation de la figure 2 et dans celui de la figure 3, la tête 51, 61 de la vis et l'écrou 52, 62 viennent en appui contre les parois extérieures 23, 24 de la chape 22 formée par le berceau 2.

La figure 3 montre un autre mode de réalisation de l'invention, dans lequel l'assemblage 1c comprend un tirant 7 permettant de lier l'assemblage 1c avec le châssis du véhicule. Le tirant 7 est muni de moyens formant palier 70 du type cylindre.

Les moyens formant palier 23, 25 du berceau 2 forment une deuxième chape 26 qui est disposée ici en avant, dans le sens d'avancement du véhicule, par rapport à la première chape 22. Dans la deuxième chape 26 sont disposés les moyens formant palier 70 du tirant 7, et l'axe fileté 84 de la vis traverse la deuxième chape 26 et les moyens formant palier 70 du tirant 7.

Les moyens de liaison 8 comprennent l'axe fileté 84 et un axe libre 83 qui s'étend ici dans le prolongement de l'axe fileté 84 vers l'avant du véhicule et qui reçoit la prolonge 4.

La tête 81 de la vis est en appui contre la paroi extérieure 25 de la deuxième chape 26 et l'écrou 24 est en appui contre la paroi extérieure 24 de la première chape 22 qui reçoit le triangle 3. Mais la position de la tête 81 et de l'écrou 82 peut être inversée.

Pour découpler acoustiquement le tirant 7 de l'axe fileté 84, le tirant 7 s'emmanche sur l'axe fileté 84 par l'intermédiaire d'un élément de filtrage 71 du type manchon en caoutchouc disposé dans le cylindre formant les moyens de palier du tirant 7.

Dans les différents modes de réalisation présentés ci-dessus, l'axe de la vis 54, 64, 84 est orienté sensiblement selon la direction d'avancement du véhicule, c'est-à-dire l'axe X.

La première chape 22 et la deuxième chape 26 peuvent faire partie intégrante du berceau 2 ou être constituées d'éléments rapportés soudés.

Pour des facilités de montage, l'écrou 52, 62, 82 est préalablement soudé sur le berceau 2.

Dans le cas de la figure 2 et dans le cas de la figure 3, le synoptique de montage est le suivant:
- assemblage du triangle 3 sur le berceau 2 à l'aide de la vis 54, 64,
- emmanchement de la prolonge 4 sur l'axe libre 53, 63 des moyens de liaison, et
- assemblage de l'extrémité avant de la prolonge 4 à la caisse lors de l'assemblage du train avant sur la caisse.

Dans le cas de la figure 4, le synoptique de montage est le suivant:
- mise en place du tirant 7 sur le berceau 2,
- assemblage du triangle 3 sur le berceau 2 à l'aide de la vis 84,
- emmanchement de la prolonge 4 sur l'axe libre 83 des moyens de liaison, et
- assemblage de l'extrémité avant de la prolonge 4 à la caisse lors de l'assemblage du train avant sur la caisse.

## Revendications

1. Assemblage (1a, 1b, 1c) comprenant un berceau (2), un triangle (3), une prolonge de berceau (4) et un dispositif de fixation (5, 6, 8), le dispositif de fixation (5, 6, 8) comprenant des moyens de liaison prévus pour relier entre eux le berceau (2), le triangle (3) et la prolonge (4), **caractérisé en ce que** lesdits moyens de liaison comprennent un axe libre (53, 63, 83) sur lequel s'emmanche la prolonge (4).

2. Assemblage (1a, 1b, 1c) selon la revendication 1, **caractérisé en ce que** la prolonge (4) s'emmanche sur l'axe libre (53, 63, 83) par l'intermédiaire d'un élément de filtrage (40) du type manchon en caoutchouc.

3. Assemblage (1a, 1b, 1c) selon la revendication 1 ou 2, **caractérisé en ce que** lesdits moyens de liaison comprennent une vis (51, 54; 61, 64; 81, 84) et un écrou (52, 62, 82), **en ce que** le berceau (2) et le triangle (3) comprennent des moyens formant palier (23, 24, 25; 30), et **en ce que** les moyens formant palier s'emmanchent sur l'axe (54, 64, 84) de la vis entre la tête (51, 61, 81) de la vis et l'écrou.

4. Assemblage (1a, 1b, 1c) selon la revendication 3 lorsqu'elle dépend de l'une des revendications 2 ou 3, **caractérisé en ce que** l'axe (54, 64, 84) de la vis et l'axe libre (53, 63, 83) sont coaxiaux.

5. Assemblage (1a, 1b, 1c) selon l'une des revendications 3 ou 4, **caractérisé en ce que** les moyens formant palier (23, 24) du berceau (2) forment une première chape (22), dans laquelle sont disposés les moyens formant palier (30) du triangle (3), et **en ce que** l'axe (84) de la vis traverse la première chape (22) et les moyens formant palier (30) du triangle (3).

6. Assemblage (1c) selon la revendication 5, **caractérisé en ce qu'**il comprend un tirant (7) muni de moyens formant palier (70), **en ce que** les moyens formant palier (23, 25) du berceau (2) forment une deuxième chape (26) dans laquelle sont disposés les moyens formant palier (70) du tirant (7), et **en ce que** l'axe (54, 64) de la vis traverse la deuxième chape (26) et les moyens formant palier (70) du tirant (7).

7. Assemblage (1a, 1b, 1c) selon l'une des revendications 5 ou 6, **caractérisé en ce que** la tête (51, 61, 81) de la vis et l'écrou (52, 62, 82) viennent en appui contre les parois extérieures (23, 24; 24, 25) des chapes (22, 26).

8. Véhicule automobile comprenant un assemblage (1a, 1b, 1c) selon l'une des revendications précédentes.

## Claims

1. Assembly (1a, 1b, 1c) comprising a cradle (2), a triangle (3), a cradle projection (4) and a fixing device (5, 6, 8), the fixing device (5, 6, 8) comprising connecting means provided to connect the cradle (2), the triangle (3) and projection (4) with each other, **characterized in that** the said connecting means comprise a free axis (53, 63, 83) on which the projection (4) is mounted.

2. Assembly (1a, 1b, 1c) according to Claim 1, **characterized in that** the projection (4) is mounted on the free axle (53, 63, 83) by means of a filtering element (40) of the rubber sleeve type.

3. Assembly (1a, 1b, 1c) according to Claim 1 or 2, **characterized in that** the said connecting means comprise a screw (51, 54; 61, 64; 81, 84) and a nut (52, 62, 82), **in that** the cradle (2) and the triangle (3) comprise means forming a bearing (23, 24, 25; 30), and **in that** the means forming a bearing are mounted on the axis (54, 64, 84) of the screw between the head (51, 61, 81) of the screw and the nut.

4. Assembly (1a, 1b, 1c) according to Claim 3 when it depends on one of Claims 2 or 3, **characterized in that** the axis (54, 64, 84) of the screw and the free axis (53, 63, 83) are coaxial.

5. Assembly (1a, 1b, 1c) according to one of Claims 3 or 4, **characterized in that** the means forming a bearing (23, 24) of the cradle (2) form a first clevis (22), which are disposed the means forming a bearing (30) of the triangle (3), and **in that** the axis (84) of the screw passes through the first clevis (22) and the means forming a bearing (30) of the triangle (3).

6. Assembly (1c) according to Claim 5, **characterized in that** it comprises a tierod (7) provided with means forming a bearing (70), **in that** the means forming a bearing (23, 25) of the cradle (2) form a second clevis (26) in which are disposed the means forming a bearing (70) of the tierod (7), and **in that** the axis (54, 64) of the screw passes through the second clevis (26) and the means forming a bearing (70) of the tierod (7).

7. Assembly (1a, 1b, 1c) according to one of Claims 5 or 6, **characterized in that** the head (51, 61, 81) of the screw and the nut (52, 62, 82) come to rest against the exterior walls (23, 24; 24, 25) of the clevises (22, 26).

8. Motor vehicle comprising an assembly (1a, 1b, 1c) according to one of the preceding claims.

## Patentansprüche

1. Aufbau (1a, 1b, 1c), der einen Sattel (2), ein Dreieck (3), eine Sattelverlängerung (4) und eine Befestigungsvorrichtung (5, 6, 8) aufweist, wobei die Befestigungsvorrichtung (5, 6, 8) Verbindungsmittel aufweist, die vorgesehen sind, um den Sattel (2), das Dreieck (3) und die Verlängerung (4) untereinander zu verbinden, **dadurch gekennzeichnet, dass** die Verbindungsmittel eine freie Achse (53, 63, 83) aufweisen, auf der die Verlängerung (4) aufgeschrumpft ist.

2. Aufbau (1a, 1b, 1c) nach Anspruch 1, **dadurch gekennzeichnet, dass** die Verlängerung (4) auf der freien Achse (53, 63, 83) über ein Filterelement (40) des Typs Stutzen aus Kautschuk aufgeschrumpft ist.

3. Aufbau (1a, 1b, 1c) nach Anspruch 1 oder 2, **dadurch gekennzeichnet, dass** die Verbindungsmittel eine Schraube (51, 54; 61, 64; 81, 84) und eine Mutter (52, 62, 82) aufweisen, dass der Sattel (2) und das Dreieck (3) Mittel aufweisen, die ein Lager (23, 24, 25; 30) bilden, und dass die ein Lager bildenden Mittel auf die Achse (54, 64, 84) der Schraube zwischen dem Kopf (51, 61, 81) der Schraube und der Mutter aufgeschrumpft sind.

4. Aufbau (1a, 1b, 1c) nach Anspruch 3, wenn er von einem der Ansprüche 2 oder 3 abhängt, **dadurch gekennzeichnet, dass** die Achse (54, 64, 84) der Schraube und die freie Achse (53, 63, 83) koaxial sind.

5. Aufbau (1a, 1b, 1c) nach einem der Ansprüche 3 oder 4, **dadurch gekennzeichnet, dass** die ein Lager bildenden Mittel (23, 24) des Sattels (2) eine erste Gabel (22) bilden, in der die ein Lager bildenden Mittel (30) des Dreiecks (3) angeordnet sind, und dass die Achse (84) der Schraube die erste Gabel (22) und die ein Lager bildenden Mittel (30) des Dreiecks (3) durchquert.

6. Aufbau (1c) nach Anspruch 5, **dadurch gekennzeichnet, dass** er einen Zugstab (7) aufweist, der mit ein Lager bildenden Mitteln (70) versehen ist, und dass die ein Lager bildenden Mittel (23, 25) des Sattels (2) eine zweite Gabel (26) bilden, in der die ein Lager bildenden Mittel (70) des Zugstabs (7) angeordnet sind, und dass die Achse (54, 64) der Schraube die zweite Gabel (26) und die ein Lager bildenden Mittel (70) des Zugstabs (7) durchquert.

7. Aufbau (1a, 1b, 1c) nach einem der Ansprüche 5 oder 6, **dadurch gekennzeichnet, dass** der Kopf (51, 61, 81) der Schraube und die Mutter (52, 62, 82) gegen die Außenwände (23, 24; 24, 25) der Gabeln (22, 26) zum Aufliegen kommen.

8. Kraftfahrzeug, das einen Aufbau (1a, 1b, 1c) nach einem der vorhergehenden Ansprüche aufweist.
